Europäisches Patentamt

(19) European Patent Office

Office européen des brevets

(11) Numéro de publication: **0 268 520
B1**

(12) **FASCICULE DE BREVET EUROPEEN**

(45) Date de publication du fascicule du brevet:
**10.01.90**

(21) Numéro de dépôt: **87402455.7**

(22) Date de dépôt: **30.10.87**

(51) Int. Cl.⁴: **F16K 15/04,** F16K 27/02

(54) **Clapet anti-retour pour circuit de liquide sous pression dans un moteur à combustion interne.**

(30) Priorité: **06.11.86 FR 8615493**

(43) Date de publication de la demande:
**25.05.88 Bulletin 88/21**

(45) Mention de la délivrance du brevet:
**10.01.90 Bulletin 90/2**

(84) Etats contractants désignés:
**DE GB IT**

(56) Documents cités:
**DE-A- 1 600 685
DE-A- 2 528 244
DE-A- 2 901 902
DE-A- 2 941 244
DE-A- 3 040 800
GB-A- 198 888
US-A- 3 937 250**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Leroy, Philippe, 7, rue Linne,
F-25200 Montbeliard(FR)**
Inventeur: **Lequeulx, Daniel, 5, rue de la Versenne,
F-90300 Vetrigne(FR)**

(74) Mandataire: **Durand, Yves Armand Louis et al, Cabinet Z.
Weinstein 20, Avenue de Friedland, F-75008 Paris(FR)**

## Description

La présente invention a essentiellement pour objet un clapet anti-retour en particulier pour un circuit de liquide sous pression dans un moteur à combustion interne comme décrit dans le préambule des revendications 1 et 2 respectivement. Un tel clapet anti-retour est connu d'après le DE-A 2 901 902.

On sait que dans les culasses de moteur équipées de poussoirs hydrauliques pour commander les soupapes, on utilise des clapets qui permettent d'éviter que l'huile contenue dans les conduites d'alimentation des poussoirs ne s'écoule par gravité lors de l'arrêt du moteur et soit remplacée par de l'air qui risque de perturber le fonctionnement des poussoirs hydrauliques.

Ces clapets se composent généralement de plusieurs pièces séparées et notamment d'une bille, d'un ressort sollicitant cette bille et d'un siège sur lequel prend appui la bille, toutes ces pièces devant être montées dans un ou plusieurs alésages de la culasse.

Comme on le comprend, on se heurte à des difficultés et des complications de montage, sans parler du fait qu'il y a un risque de laisser échapper une pièce ou de réaliser un montage inversé, de sorte qu'au total le montage de ce genre de clapet comprenant plusieurs petites pièces distinctes n'est pas compatible avec la fabrication de moteurs en série.

Par ailleurs, on se heurte aussi à des difficultés de démontage tenant par exemple à l'emmanchement à force des sièges pour assurer l'étanchéité, et à des difficultés de contrôle du fonctionnement des clapets.

La présente invention a pour but de remédier notamment aux inconvénients ci-dessus en proposant un clapet anti-retour monobloc qui est d'une conception particulièrement simple, qui peut être monté très rapidement et d'un manière automatique sur une chaîne d'assemblage de pièces moteur, et qui peut, du fait de son autonomie, être facilement contrôlé séparément de la culasse dans laquelle il doit être monté.

A cet effet, l'invention a pour objet un clapet anti-retour comme décrit dans la revendication 1 et 2 respectivement.

Suivant une caractéristique, le corps cylindrique supportant tous les éléments du clapet comporte à sa périphérie un moyen détrompeur permettant l'insertion dudit corps dans la conduite suivant le bon sens et constitué par exemple par un épaulement susceptible de coopérer avec un autre épaulement ménagé a l'intérieur de ladite conduite.

On précisera encore ici que le corps cylindrique comporte également à sa périphérie une gorge contenant un joint d'étanchéité entre corps et conduite.

Selon un mode de réalisation, la gorge précitée est formée par un espace annulaire laissé entre la deuxième extrémité du corps et un épaulement de l'élément tubulaire solidaire de cette deuxième extrémité.

La première extrémité du corps cylindrique constitue une face d'appui pour une vis ou analogue vissée dans une pièce comportant ladite conduite et maintenant le corps cylindrique en position de montage et de butée dans la conduite par coopération de l'épaulement du corps et de l'épaulement de la conduite.

Le siège recevant l'organe mobile ou la bille est directement usiné dans la première extrémité du corps, tandis que l'élément tubulaire d'appui et de centrage du ressort est fixé sur la deuxième extrémité du corps par soudage, collage ou analogue.

Le siège et l'élément tubulaire précités sont respectivement maintenus aux deux extrémités du corps dans des gorges ou analogues formées chacune par une partie rabattue desdites extrémités vers l'intérieur du corps et par un épaulement ménagé dans la périphérie interne de ce corps.

On comprend donc qu'on a réalisé suivant l'invention un clapet anti-retour particulièrement compact qui peut être contrôlé très facilement et peut être monté dans par exemple une conduite d'écoulement de liquide ménagée dans une culasse de moteur.

Mais d'autres avantages et caractéristiques de l'invention apparaîtront mieux dans la description d'étaillée qui suit et se réfère aux dessins annexés, donnés uniquement à titre d'exemple, et dans lesquels :

La figure 1 est une vue en coupe axiale d'un premier mode de réalisation de clapet anti-retour conforme à cette invention;

La figure 2 est également une vue en coupe axiale de ce clapet en position montée dans la culasse d'un moteur représentée ici en partie; et

La figure 3 est une vue en coupe axiale d'un autre mode de réalisation de clapet anti-retour conforme aux principes de l'invention.

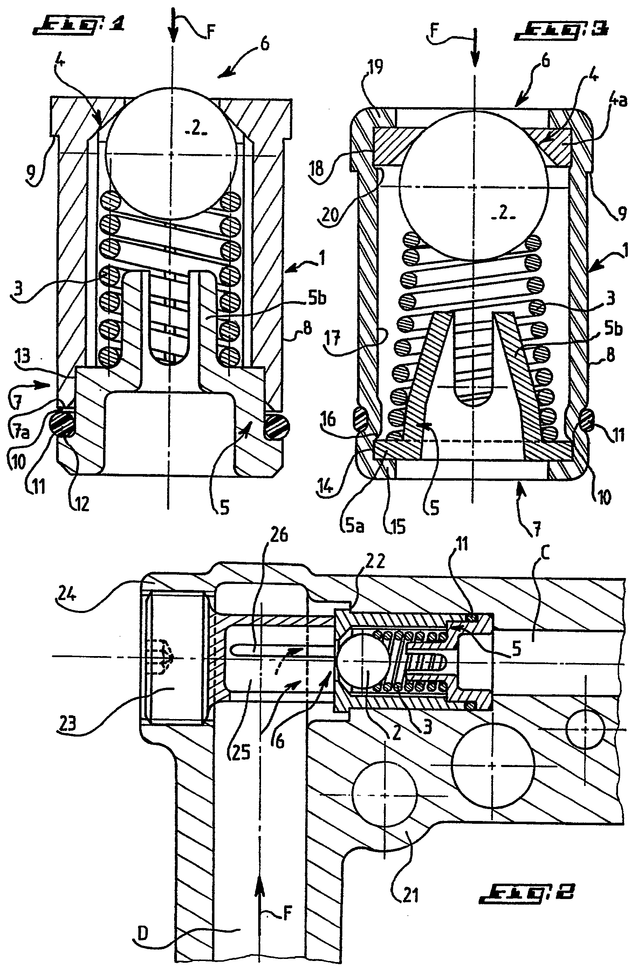

Comme on le voit sur les figures 1 et 2, un clapet anti-retour selon cette invention forme une seule pièce comprenant un corps cylindrique creux 1 renfermant un organe mobile qui revêt ici la forme d'une bille 2, et un ressort 3 qui sollicite en permanence la bille 2 contre un siège 4 et qui est agencé autour d'une portion 5b d'un élément tubulaire 5 d'appui et de centrage dudit ressort.

La bille 2, le ressort 3, et le siège 4 constituent les éléments classiques d'un clapet anti-retour , c'est-à-dire d'un clapet qui s'ouvre sous l'effet d'une pression supérieure ou égale à un seuil déterminé dans un sens, comme cela est matérialisé par les flèches F sur les figures, et qui assure une étanchéité statique dans l'autre sens, sous l'effet du ressort de compression 3.

Le corps cylindrique 1 contenant tous ces éléments comprend deux extrémités opposées et ouvertes, à savoir une première extrémité 6 comportant le siège 4, et une deuxième extrémité 7 supportant l'élément tubulaire 5.

Le corps cylindrique 1 comporte à sa périphérie un épaulement annulaire 9 qui forme un moyen détrompeur et dont l'utilité sera expliquée plus loin.

La périphérie 8 du corps cylindrique creux 1 comporte également une gorge 10 contenant un joint d'étanchéité 11, par exemple un joint torique, qui, comme on le comprend, demeure ainsi attaché au corps 1.

Dans le mode de réalisation de la figure 1, la gorge 10 est formée par un espace annulaire laissé entre la face extrême 7a de la deuxième extrémité 7 du corps 1 et un épaulement 12 de l'élément tubulaire 5 solidaire de ladite deuxième extrémité.

L'élément tubulaire 5 visible sur cette figure 1 présente quelque peu la forme d'un bouchon axialement alésé et fixé en 13 sur la deuxième extrémité 7 du corps 1 par tout moyen approprié, tel que collage, soudage ou analogue. Quant au siège 4 visible sur la figure 1, on voit qu'il est directement usiné dans l'extrémité 6 du corps 1 et présente une forme tronconique, étant bien entendu qu'on pourrait prévoir tout autre forme que celle représentée, sans sortir du cadre de l'invention.

Dans le mode de realisation visible sur la figure 3, le siège 4 constitue une pièce séparée 4a, tandis que l'élément tubulaire 5 est, non pas comme sur la figure 1, rapporté et fixé sur la deuxième extrémité 7 du corps 1, mais retenu à l'intérieur de ce corps.

Plus précisément, l'élément tubulaire 5 visible sur la figure 3 comporte une embase 5a maintenue dans la deuxième extrémité 7 du corps 1, à l'intérieur d'une gorge ou analogue 14 formée par une partie 15 de l'extrémité 7 rabattue vers l'intérieur du corps 1 et par un épaulement 16 ménagé dans la périphérie interne 17 de ce corps.

De la même manière, la pièce séparée 4a formant siège à la première extrémité 6 du corps cylindrique 1 est maintenue dans une gorge 18 formée par une partie 19 de l'extrémité 6 rabattue vers l'intérieur ou l'axe du corps 1 et par un épaulement 20 ménagé dans la périphérie interne 17 dudit corps.

En se reportant à la figure 2, on voit une petite partie 21 de la culasse d'un moteur, laquelle culasse comporte une conduite C communiquant avec une conduite D et dans laquelle passe un liquide, tel que par exemple de l'huile, destinee à alimenter des poussoirs hydrauliques de commande de soupape (non représentés).

Dans la conduite C est monté le clapet représenté sur la figure 1, mais qui pourrait très bien être aussi le clapet représenté sur la figure 3.

On voit que l'épaulement 9 prévu à la périphérie du corps cylindrique 1 sert de moyen détrompeur, c'est-à-dire que le clapet ne peut être introduit dans la conduite C que dans le bon sens, grâce audit épaulement et à l'épaulement 22 prévu dans ladite conduite.

Par ailleurs, le joint torique 11 prévu lui aussi à la périphérie externe du corps 1 et qui demeure solidaire de cette périphérie assure l'étanchéité entre le corps 1 et la conduite C.

Enfin, la première extrémité 6 du corps 1 constitue une face d'appui pour une vis 23 présentant la forme d'un bouchon vissé dans un taraudage 24. Plus précisément, le bouchon 23 comporte une partie en forme de lanterne 25 s'appliquant contre l'éxtrémite 6 du corps 1 et comportant des ajours 26 facilitant la comunication de la conduite D avec la conduite C entre lesquelles est interposé le corps 1 formant clapet anti-retour. On comprend donc que le corps 1 peut être introduit très facilement dans la conduite C par l'orifice taraudé 24, ce après quoi, ledit corps sera maintenu dans cette conduite grâce au bouchon fileté 23 qui, par l'intermédiaire de son prolongement 25, s'appliquera sur l'extrémité 6 du corps 1.

Revenant à l'élément tubulaire 5 visible sur les figures 1 et S, on voit que non seulement il débouche vers la bille 2 et vers la deuxieme extrémité 7 de ce corps pour permettre le passage du liquide lorsque la bille est éloignée de son siège 4 sous l'effet d'une pression s'exerçant à l'encontre de la force de compression du ressort 3, mais on voit aussi que cet élément tubulaire 5 comporte une partie 5b servant au centrage du ressort 3.

On a donc réalisé suivant l'invention un clapet anti-retour monobloc, pouvant être contrôle très facilement et pouvant être également introduit très facilement et dans le bon sens dans une conduite tout en assurant une bonne étanchéité vis-à-vis de cette conduite. Grâce à ce clapet anti-retour, on évite tout montage à force et le démontage d'un tel clapet est particulièrement aisé, puisqu'il suffit, comme on le comprend, d'extraire une seule pièce de la conduite.

Le matériau du corps 1 et la forme de l'organe mobile 2 et du siège 4 peuvent être quelconques sans sortir du cadre de l'invention.

## Revendications

1. Clapet anti-retour, en particulier pour un circuit de liquide sous pression, tel que de l'huile, installé dans une partie d'un moteur à combustion interne et du type comprenant ledit clapet anti-retour monobloc pouvant être introduit dans une conduite (C) de ladite partie et comportant un corps cylindrique creux (1) renfermant un organe mobile (2) tel qu'une bille sollicitée en permanence par un ressort (3) contre un siège (4), ledit corps creux comprenant une première extrémité ouverte (6) comportant le siège (4) et une deuxième extrémité ouverte opposée (7) qui supporte le ressort (3), l'une des deux extrémités ouvertes du corps cylindrique (1) constituant une face d'appui pour une vis (23) vissée dans ladite partie du moteur comportant la conduite (C) et maintenant ledit corps cylindrique en position de montage et de butée étanche dans la conduite par coopération de deux épaulements (9, 22), caractérisé en ce que sur la deuxième extrémité (7) du corps cylindrique (1) est rapporté un élément tubulaire (5) d'appui et de centrage du ressort (3), qui est fixé par soudage ou collage sur cette deuxième extrémité en laissant entre celle-ci et un épaulement (12) de l'élément tubulaire (5) un espace annulaire formant gorge (10) qui contient un joint torique (11) assurant étanchéité entre le corps (1) et la conduite (C).

2. Clapet anti-retour, en particulier pour un circuit de liquide sous pression, tel que de l'huile, installé dans une partie d'un moteur à combustion interne et du type comprenant ledit clapet anti-retour monobloc pouvant être introduit dans une conduite (C) de ladite partie et comportant un corps cylindrique creux (1) renfermant un organe mobile (2) tel qu'une bille sollicitée en permanence par un ressort (3) contre un siège (4), ledit corps creux comprenant une première extrémité ouverte (6) comportant le siège (4) et une deuxième extrémité ouverte opposée (7) qui supporte le ressort (3), l'une des deux extrémités ouvertes du corps cylindrique (1) constituant une face d'appui pour une vis (23) vissée dans ladite partie du moteur comportant la conduite (C) et maintenant ledit cylindrique en position de montage et de butée étanche dans la conduite par coopération de deux épaulements (9, 22), caractérisé en ce que, du côté de la première extrémité ouverte (6) du corps (1), le siège (4) est constitué par une pièce séparée (4a) maintenue dans une gorge (18) formée par une partie (19) de l'extrémité (6) rabattue vers l'intérieur du corps (1) et par un épaulement (20) ménagé dans la périphérie interne (17) dudit corps, tandis que la deuxième extrémité ouverte (7) du corps (1) est munie d'une gorge (14) formée par une partie (15) de l'extrémité (7) rabattue vers l'intérieur du corps (1) et par un épaulement (16) ménagé dans la périphérie interne (17) de ce corps, ladite gorge maintenant l'embase (5a) d'un élément tubulaire (5) d'appui et de centrage du ressort (3), et ledit corps (1) comportant sur sa périphérie externe (8) une gorge (10) dans laquelle est logé un joint d'étanchéité (11).

## Patentansprüche

1. Rückschlagventil, insbesondere für einen Kreislauf von Druckflüssigkeit wie Öl, welches in einem Teil einer Brennkraftmaschine angeordnet ist und derjenigen Gattung die das besagte einstückige Rückschlagventil aufweist, welches in eine Leitung (C) des besagten Teils einsetzbar ist und einen hohlen zylindrischen Körper (1) umfasst, der ein bewegliches Glied (2) wie eine dauernd durch eine Feder (3) gegen einen Sitz (4) beaufschlagte Kugel einschließt, wobei der besagte hohle Körper ein erstes offenes, den Sitz (4) aufweisendes Ende (6) und ein zweites die Feder (3) tragendes offenes entgegengesetztes Ende (7) aufweist, wobei das eine der beiden offenen Enden des zylindrischen Körpers (1) eine Stützfläche für eine in dem besagten, die Leitung (C) aufweisenden Motorteil eingeschraubte Schraube (23) bildet und den besagten zylindrischen Körper in dichter Einbau- und Anschlagstellung in der Leitung durch Zusammenwirkung von zwei Schultern (9, 22) hält, dadurch gekennzeichnet, daß an dem zweiten Ende (7) des zylindrischen Körpers (1) ein rohrförmiges Element (5) zum Abstützen und Zentrieren der Feder (3) angebracht ist, welches durch Schweißen oder Kleben an diesem zweiten Ende befestigt ist unter Beibehaltung zwischen diesem Ende und einer Schulter (12) des rohrförmigen Elements (5) eines eine Nut bildenden ringförmigen Raumes (10), der einen die Abdichtung zwischen dem Körper (1) und der Leitung (C) gewährleistenden torischen Dichtring (11) enthält.

2. In einem Teil einer Brennkraftmaschine angeordnetes Rückschlagventil insbesondere für einen Kreislauf von Druckflüssigkeit wie Öl und derjenigen Gattung, die das besagte in die Leitung (C) des besagten Teiles einsetzbare einstückige Rückschlagventil umfaßt und mit einem hohlen zylindrischen Körper (1) der ein bewegliches Glied (2) wie eine ständig durch eine Feder (3) gegen einen Sitz (4) beaufschlagte Kugel umschließt, wobei der besagte hohle Körper ein erstes den Sitz (4) aufweisendes Ende

offenes Ende (6) und ein zweites die Feder (3) tragendes entegegengesetztes offenes Ende (7) umfaßt, wobei das eine der beiden offenen Enden des zylindrischen Körpers (1) eine Stützfläche für eine in den die Leitung (C) aufweisenden Motorteil eingeschraubte Schraube (23) bildet und den besagten zylindrischen Körper in der dichten Einbau- und Anschlagstellung in der Leitung durch Zusammenwirkung von zwei Schultern (9, 22) hält, dadurch gekennzeichnet, daß zu dem ersten offenen Ende (S) des Körpers (1) hin, der Sitz (4) aus einem getrennten Stück (4a) besteht, welches in einer ringförmigen Nut (18) gehalten wird, welche durch einen nach dem Inneren des Körpers (1) umgebogenen Teil (19) des Endes (6) und durch eine an dem inneren Umfang (17) des besagten Körpers angeordnete Schulter (20) gebildet wird, während das zweite offene Ende (7) des Körpers (1) mit einer ringförmigen Nut (14) versehen ist, die durch einen nach dem Inneren des Körpers (1) umgebogenen Teil (15) des Endes (7) und durch eine an dem inneren Umfang (17) dieses Körpers angeordnete Schulter (16) gebildet wird, wobei die besagte ringförmige Nut den Flansch (5a) eines rohrförmigen Elements (5) für das Abstützen und Zentrieren der Feder (3) hält und der besagte Körper (1) an seinem Aussenumfang (8) eine ringförmige Nut (10) aufweist, in welcher eine Dichtung (11) eingesetzt ist.

## Claims

1. Non-return valve in particular for a circuit of pressure liquid such as oil and mounted in a portion of an internal combustion engine and of the type comprising said integrally-made non-return valve insertable into a duct (C) of said portion and comprising a hollow cylindrical body (1) enclosing a movable member (2) such as a ball permanently urged by a spring (3) against a seat (4), said hollow body comprising a first open end (6) including said seat (4) and a second opposite open end (7) supporting the spring (3), one of the two open ends of the cylindrical body (1) forming a bearing face for a screw (23) screwed into said portion of the engine comprising said duct (C) and retaining said cylindrical body in mounted and fluid-tight abutting position within said duct through co-operation of two shoulders (9, 22), characterized in that on the second end (7) of the cylindrical body (1) is fitted a tubular element (5) for bearing and centering the spring (3) and which is secured by welding or adhesive bonding onto this second end while leaving between the latter and a shoulder (12) of the tubular element (5) a groove-like annular space (10) which contains an O-ring seal (11) providing for the fluid-tightness between the body (1) and the duct (C).

2. Non-return valve in particular for a circuit of pressure liquid such as oil and mounted in a portion of an internal combustion engine and of the kind comprising said integrally-made non-return valve insertable into a duct (C) of said portion and comprising a hollow cylindrical body (1) enclosing a movable member (2) such as a ball permanently urged by a spring (3) against a seat (4), said hollow body comprising a first open end (6) including the seat (4) and a second opposite open end (7) which supports the spring (3), one of the two open ends of the cylindrical body (1) forming a bearing face for a screw (23) screwed into said portion of the engine comprising the duct (C) and retaining said cylindrical body in mounting and fluid-tight abutment position within the duct through co-operation of two shoulders (9, 22), characterized in that towards the first open end (6) of the body (1), the seat (4) consists of a separate part (4a) maintained in an annular groove (18) formed by a portion (19) of the end (6) turned towards the inside of the body (1) and by a shoulder (20) arranged in the inner periphery (17) of said body, whereas the second open end (7) of the body (1) is provided with an annular groove (14) formed by one portion (15) of the end (7) turned towards the inside of the body (1) and by a shoulder (16) arranged in the inner periphery (17) of this body, said annular groove retaining the flange (5a) of a tubular element (5) for bearing and centering the spring (3) and said body (1) comprising on its outer periphery (8) an annular groove (10) in which is received a sealing joint (11).

EP 0 268 520 B1

Fig. 1

Fig. 3

Fig. 2